# EUROPEAN PATENT APPLICATION

(11) **EP 4 199 495 A1**
(43) Date of publication of application: **21.06.2023**
(21) Application number: 21214593.2
(22) Date of filing: 15.12.2021
(51) Int. Cl.: H04N 5/232, G06V 20/54, H04N 5/247, H04N 5/77, H04N 5/783, H04N 7/18, G08G 1/054

(54) **REGULATING FRAME PROCESSING RATES**

(71) Applicant: Nokia Solutions and Networks Oy, 02610 Espoo (FI)
(72) Inventor: Prabhu, Shailesh, 576104 Manipal (IN)
(74) Representative: Nokia EPO representatives

(57) **Abstract**

In some examples, a system for regulating a frame processing rate in a vehicular traffic monitoring apparatus comprises an image capture device comprising a first field of view, the image capture device configured to generate image data within the first field of view, the image data comprising a set of image frames, a speed detection apparatus comprising a second field of view, the speed detection apparatus configured to generate speed data representing a speed of an object moving within the second field of view, and a controller configured to select a frame processing rate representing a number of image frames from the set of image frames to be processed per time unit on the basis of the speed data.

## Description

### Technical Field

The present disclosure relates, in general, to image processing and video analytics. Aspects of the disclosure relate to regulating a rate of processing of image frames captured as part of a vehicular traffic monitoring apparatus.

### Background

Increases in vehicular traffic are leading cities to adopt Intelligent Transportation Systems (ITS) in order to, amongst other things, detect vehicular traffic violations using video analytics for example. For example, vehicular traffic behaviours can be detected/classified using video analytics, with use cases including detection of traffic violations, accidents, vehicular speeds and number plates, congestion, etc.

With the advent of 5G and edge computing devices, video analytics solutions, such as those on which ITS are founded for example, can be onboarded to edge computing platforms for life cycle management and scalability purposes. However, since such edge platforms may manage a large number of video analytics applications simultaneously, each application is expected to be resource efficient due to compute resource constraints.

### Summary

An objective of the present disclosure is to provide a system and method to control a frame processing rate based on traffic density and speed of objects detected to avoid processing redundant frames whilst ensuring that objects can be detected.

The foregoing and other objectives are achieved by the features of the independent claims.

Further implementation forms are apparent from the dependent claims, the description and the Figures.

A first aspect of the present disclosure provides a system for regulating a frame processing rate in a vehicular traffic monitoring apparatus, the system comprising an image capture device comprising a first field of view, the image capture device configured to generate image data within the first field of view, the image data comprising a set of image frames, a speed detection apparatus comprising a second field of view, the speed detection apparatus configured to generate speed data representing a speed of an object moving within the second field of view, and a controller configured to select a frame processing rate representing a number of image frames from the set of image frames to be processed per time unit on the basis of the speed data.

In an implementation of the first aspect, the controller can select a frame processing rate on the basis of the speed of the object exceeding a predetermined threshold value. The controller can select a frame processing rate on the basis of a density of objects moving within the first field of view. The first field of view and the second field of view can at least partially overlap. The speed detection apparatus can comprise an infra-red speed detector.

The system can further comprise a processor configured to determine a density of objects moving within the first field of view using the image data. The speed detection apparatus can be geographically separated from the image capture device. In an example, the speed detection apparatus and the image capture device can be collocated.

A second aspect of the present disclosure provides a vehicular platform comprising a system as provided according to the first aspect. The platform can be, e.g., an autonomous vehicle, or an apparatus deployed to monitor a specific region, such as a junction or intersection.

A third aspect of the present disclosure provides a non-transitory machine-readable storage medium encoded with instructions for regulating a frame processing rate in a vehicular traffic monitoring apparatus, the instructions executable by a processor of a machine whereby to cause the machine to generate image data using an image capture device comprising a first field of view, the image data comprising a set of image frames, generate, using a speed detection apparatus comprising a second field of view, speed data representing a speed of an object moving within the second field of view, and select a frame processing rate representing a number of image frames from the set of image frames to be processed per time unit on the basis of the speed data. The non-transitory machine-readable storage medium can further comprise instructions to select a frame processing rate on the basis of a density of objects moving within the first field of view. The non-transitory machine-readable storage medium can further comprise instructions to increase the frame processing rate on the basis of the speed of the object exceeding the predetermined threshold value. The non-transitory machine-readable storage medium can further comprise instructions to determine a density of objects moving within the first field of view using the image data.

A fourth aspect of the present disclosure provides a method for regulating a frame processing rate in a vehicular traffic monitoring apparatus, the method comprising generating image data using an image capture device comprising a first field of view, the image data comprising a set of image frames, generating, using a speed detection apparatus comprising a second field of view, speed data representing a speed of an object moving within the second field of view, and selecting a frame processing rate representing a number of image frames from the set of image frames to be processed per time unit on the basis of the speed data. The method can further comprise selecting the frame processing rate on the basis of a density of objects moving within the first field of view.

These and other aspects of the invention will be apparent from the embodiment(s) described below.

### Brief Description of the Drawings

In order that the present invention may be more readily understood, embodiments of the invention will now be described, by way of example, with reference to the accompanying drawings, in which:
Figure 1 is a schematic representation of a system according to an example;
Figure 2 is a schematic representation of a method according to an example;
Figure 3 is a schematic representation of multi-threaded process according to an example;
Figure 4 is a flow chart of a method according to an example; and
Figure 5 is a schematic representation of a machine according to an example.

### Detailed Description

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Frameworks and systems exist to optimize video analytics models. Nevertheless, there exists a lack of systems and methods to intelligently control video processing rates, whereby to optimize application performance. For example, without context-aware control over the processing rate of frames in a video stream, video analytics applications can end up processing redundant frames (i.e., frames which comprise no new or meaningfully different information), thereby decreasing overall system efficiency.

In the context of ITS for example, which may be implemented on an edge device or in an autonomous vehicle for example, redundant processing is to be avoided due to the limited compute resources available. In such systems, where an image capture device is used to generate frames of a video stream for processing, the transmission rate of the image capture device can be throttled in order to alleviate the strain on existing compute resources. This can implemented at, e.g., junctions, at which there is a relatively slow vehicle flow. However, such image capture devices typically comprise a relatively small or short coverage area (field of view), or at the very least a finite field of view. Accordingly, there can be instances where, e.g., a fast-moving vehicle passes into the field of the view of the image capture device and the so throttled video frame rate prevents the detection of the high-speed vehicle. Thus, in the specific context of an ITS for example, classification of a violation of this relatively higher speed vehicle can be missed since the frame rate is insufficient to enable vehicle detection and/or identification.

According to an example, there is provided a system and method for regulating a frame processing rate in a vehicular traffic monitoring apparatus. The system can be used to improve performance of, e.g., edge devices in an ITS by optimizing a frame processing rate. In some examples, vehicular speeds can be determined and cross correlated with information relating to traffic density to enable a video processing rate to be selected. As such, high speed violations at low traffic density for example can be effectively detected, even with limited field of view of traffic cameras. The systems and methods specified herein can also apply to other video analytics applications in addition to traffic analytics, such as video analytics in autonomous vehicles, asset tracking and surveillance use cases, etc.

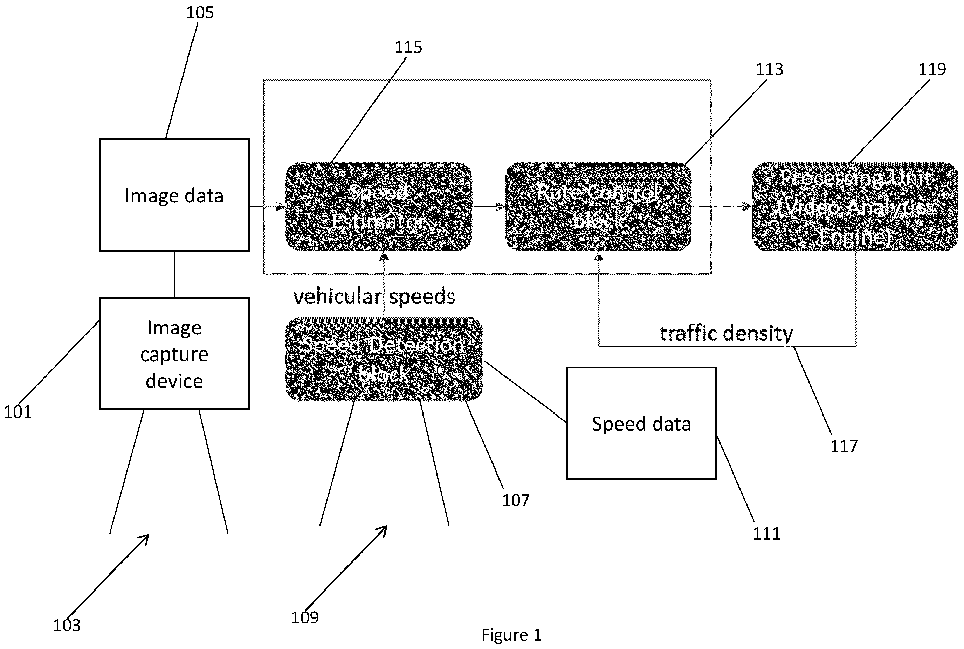

Figure 1 is a schematic representation of a system according to an example. In the example of figure 1, the system 100 is configured to regulate a frame processing rate in a vehicular traffic monitoring apparatus. Such a vehicular traffic monitoring apparatus can be part of an ITS or a platform such as an autonomous for example. The system 100 comprises an image capture device 101 comprising a first field of view 103. A field of view can comprise a solid angle through which a detector of an image capture device is sensitive to electromagnetic radiation. As such, the image capture device 101 is configured to generate image data 105 representing a scene and/or objects within the first field of view 103. In an example, the image data 105 comprises a set of image frames representing a video stream. For example, consecutive image frames can form a video of the environment within the first field of view 103.

A speed detection apparatus 107, such as an infra-red speed detector for example, comprises a second field of view 109. That is, in the example of figure 1, the speed detection apparatus can comprise an image capture device configured to generate speed data 111 representing a speed of an object or objects moving within the second field of view 109. In an example, the second field of view covers a different region than the first field of view. In an example, the second field of view is larger than the first field of view. The first and second fields of view can overlap. The second field of view can be used to capture image data over a relatively larger region than the first field of view. The second field of view can be configured to cover a region in which an object passing through or within the second field of view also passes through or within the first field of view. The second field of view can be configured such that an object passes through or within at least a portion of the second field of view before it passes through or within at least a portion of the first field of view. As such, according to an example, the speed of an object can be determined using information gathered from within the second field of view, and this information relating to the speed of the object can be used to control the processing rate of frames generated for the first field of view, enabling any object moving at a relatively faster rate to be detected and causing a rate of processing of image frames captured using the image capture device to be correspondingly increased as required in order to enable the object to be detected from within the first field of view and/or identified.

A controller 113 is configured to select a frame processing rate representing a number of image frames from the set of image frames of the image data 105 to be processed per time unit on the basis of the speed data 111. That is, the speed data 111 can be processed using a speed estimator 115 to determine the speed of an object or objects within the second field of view of the speed detection apparatus 107. Controller 113 can use this information, along with data 117 representing a traffic density with the first field of view 103 to determine a processing rate for the image data 105.

Accordingly, an image capture device 101, which can be a traffic camera installed at the junction of a road for example, can generate image data 105. Speed detection apparatus 107 can detects the speed of one or more objects such as vehicles using, e.g., infra-red (IR) and provide corresponding speed data 111 to the speed estimator 115. Speed estimator 115 can use the speed data 111 to determine the speed of the one or more objects. In an example, if the speed of the fastest moving object in a frame (Sv) is greater than a threshold speed (St), the speed estimator 115 can alert the controller 113 to increase the frame processing rate. This can occur even when the density of objects 117 within the first field of view does not necessarily warrant this. A processing unit 119 comprising a video analytics engine can be used to detect and classify e.g., vehicular traffic violations or any other type of processing (number plate recognition, etc.).

Therefore, according to an example, a frame processing rate can be selected based on a traffic density (e.g., number of vehicles detected) and a speed of an object detected in a second of view. In an example, if a measured traffic density is relatively low, such as below a predetermined threshold value for example, the controller 113 can reduce a frame processing rate by, e.g., dropping a set of input video frames to be processed. Conversely, if a traffic density is determined to be relatively high, image frames can be processed at a relatively higher frame processing rate (since, e.g., vehicles detected will be larger in number). Therefore, according to an example, the controller 113 can increase a frame processing rate (e.g., by not dropping any input video frames from a set to be processed).

In an example of a specific scenario, if there is one vehicle on the road travelling at a high speed, then due to the limited field of view of the image capture device 101 and lower frame processing rate selected by the controller (since traffic density is low), this high speed vehicle may go undetected. For example, the high-speed vehicle may be travelling at 100 kmph. If the first field of view 103 is, very broadly speaking, sufficient to image a region of around 1 metre of the road that the vehicle is travelling on, then the minimum frame rate required to capture/detect the vehicle and process the information related to the vehicle is 28 frames per second. Accordingly, the controller 113 can receive data from the speed detection apparatus 107 in addition to that relating to traffic density from the processing unit 119 in order to select a frame processing rate.

In an example, the speed estimator 115 can receive speed data 111 continuously from the speed detection apparatus 107. Thus, if the speed of the fast moving vehicle (Sv) increases beyond a threshold value, St (which can be set by the speed estimator 115), the speed estimator 115 can alert the controller 113 to increase the frame processing rate to detect high speed violations.

According to an example, a frame processing rate can therefore be selected on the basis of a traffic density (e.g., number of vehicles detected) and vehicular speed information. In an example, traffic density is directly proportional to frame processing rate. If the number of vehicles detected in a frame is low, and the vehicular speeds are also low, the controller can effectively cause a reduction in the number of image frames to be processed, thereby decreasing the frame processing rate. On the other hand, if a traffic density is high and/or the speed of a vehicle(s) is high, the controller can forwards image frames to the processing unit 119 without dropping any frames, thereby increasing the frame processing rate. In an example, the maximum frame processing rate is equal to the capture frame rate of the image capture device.

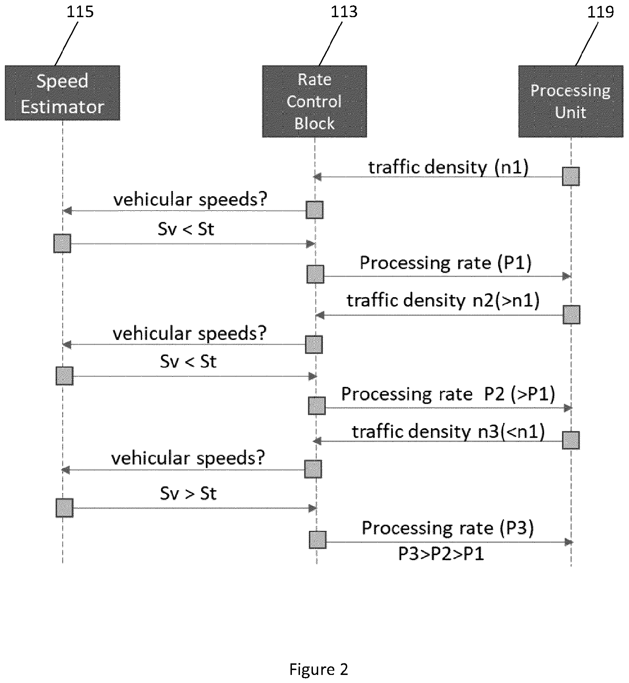

Figure 2 is a schematic representation of a method according to an example. A traffic density 117 is provided by processing unit 119 to controller 113. In an example, traffic density can be determined using image data 105. For example, a number of vehicles detected in a predetermined area can be used to generate a measure of density. This measure can be updated periodically, e.g., every 1 minute. In the example of figure 2, the measure of density, n1, is provided to controller 113. Controller 113 can query speed estimator 115 for speeds, and speed estimator 115 can return data to controller 113 representing a measure of whether the speed of one or more vehicles (Sv) is greater than or less than a predetermined speed threshold value (St). In the example of figure 2, the value returned to controller 113 indicated that Sv < St. Accordingly, for the density n1 and given that Sv < St, controller 113 can set a frame processing rate for processing unit 119 of P1.

At some subsequent point in time, a measure of density, n2 (which is greater than n1), is provided to controller 113. Controller 113 can query speed estimator 115 for speeds, and speed estimator 115 can return data to controller 113 indicating that Sv < St. Accordingly, for the density n2 and given that Sv < St, controller 113 can set a frame processing rate for processing unit 119 of P2, which is greater than PI, in recognition of the increased traffic density, which therefore necessitates an increased rate of processing (i.e., an increased number of frames to be processed per time unit from a set of capture image frames).

At some further subsequent point in time, a measure of density, n3 (which is less than n1), is provided to controller 113. Controller 113 can query speed estimator 115 for speeds, and speed estimator 115 can return data to controller 113 indicating that Sv > St. Accordingly, for the density n3 and given that Sv > St, controller 113 can set a frame processing rate for processing unit 119 of P3, where P3 > P2 > PI, in recognition of the speed of an object that is above the threshold value, despite the decrease in traffic density. That is, in order to effectively capture/detect the object moving faster than the threshold value for speed, St, the rate of frame processing is increased.

In order to have an individual control on frame-reading rate and frame-processing rate, a multi-threaded approach can be provided in an example, using a common buffer to store image frames.

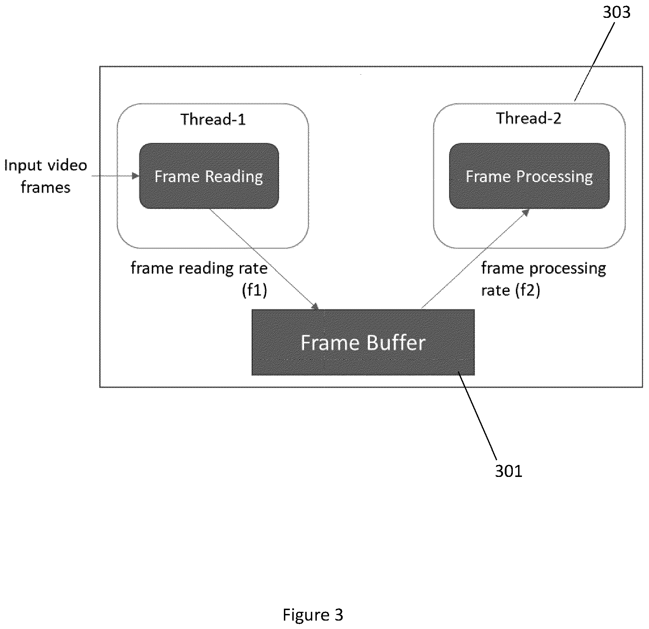

Figure 3 is a schematic representation of multi-threaded process according to an example. With reference to figure 3, image data 105 comprising a set of image frames generated using the image capture device 101 can be stored in a buffer 301 at rate f1 fps. These image frames can be picked up by a frame processing component 303 at rate f2 fps. In an example, in order to separate the execution of frame-reading and frame-processing, a multi-threaded approach can be used in which frame-reading is executed by Thread-1 and frame-processing is executed by Thread-2. It is to be noted that f2 is either less than or equal to f1 depending on the traffic density and vehicular speeds.

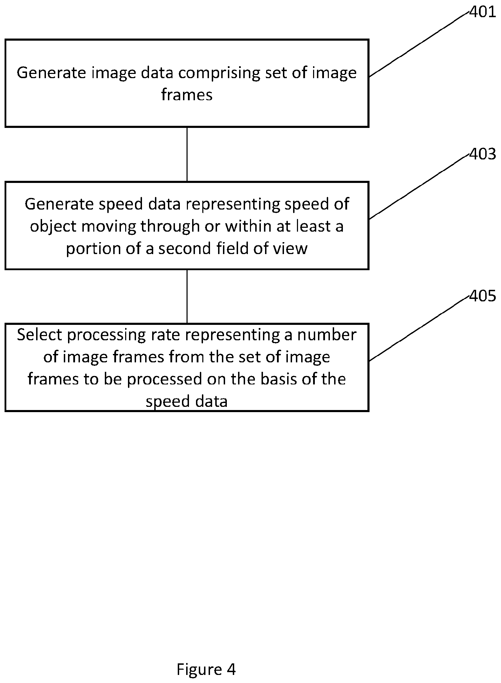

Figure 4 is a flow chart of a method according to an example. In block 401, for a method of regulating a frame processing rate in a vehicular traffic monitoring apparatus, image data is generated using an image capture device comprising a first field of view, the image data comprising a set of image frames. In block 403, a speed detection apparatus comprising a second field of view is used to generate speed data representing a speed of an object moving through or within at least a portion of the second field of view. In block 405, a frame processing rate representing a number of image frames from the set of image frames to be processed per time unit is selected on the basis of the speed data. As noted above, the density of traffic as measured within the first field of view can be used as an additional input or parameter when selected a rate of frame processing.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, user equipment such as a smart device, e.g., a smart phone, an edge device (e.g., a device at the edge or boundary of a network), a platform (such as an autonomous vehicle for example), a special purpose computer, an embedded processor or processors of other programmable data processing devices to realize the functions described in the description and diagrams. In particular, a processor or processing apparatus may execute the machine-readable instructions. Thus, modules of apparatus (for example, a module implementing a speed estimator 115, a controller 113, a video analytics engine and so on) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

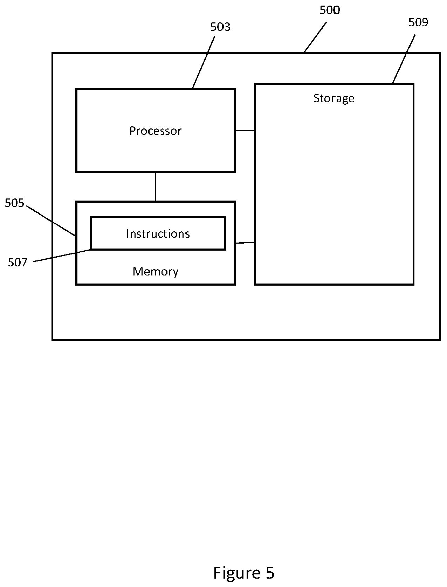

Figure 5 is a schematic representation of a machine according to an example. The machine 500 can be, e.g., a system or apparatus (e.g., 100), user equipment, or part thereof, or a platform such as an autonomous vehicle for example. The machine 500 comprises a processor 503, and a memory 505 to store instructions 507, executable by the processor 503. The machine comprises a storage 509 that can be used to store image data, speed data, data representing traffic density, speed values, threshold speed values and so on as described above with reference to figures 1 to 4 for example.

The instructions 507, executable by the processor 503, can cause the machine 500 to generate image data using an image capture device 101 comprising a first field of view, the image data comprising a set of image frames, generate, using a speed detection apparatus comprising a second field of view, speed data representing a speed of an object moving within the second field of view, and select a frame processing rate representing a number of image frames from the set of image frames to be processed per time unit on the basis of the speed data.

Accordingly, the machine 500 can implement a method for regulating a frame processing rate in a vehicular traffic monitoring apparatus.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. A system for regulating a frame processing rate in a vehicular traffic monitoring apparatus, the system comprising:
an image capture device comprising a first field of view, the image capture device configured to generate image data within the first field of view, the image data comprising a set of image frames;
a speed detection apparatus comprising a second field of view, the speed detection apparatus configured to generate speed data representing a speed of an object moving within the second field of view; and
a controller configured to select a frame processing rate representing a number of image frames from the set of image frames to be processed per time unit on the basis of the speed data.

2. The system as claimed in claim 1, wherein the controller is configured to select the frame processing rate on the basis of the speed of the object exceeding a predetermined threshold value.

3. The system as claimed in claim 1, wherein the controller is further configured to select the frame processing rate on the basis of a density of objects moving within the first field of view.

4. The system as claimed in claim 1 or 2, wherein the first field of view and the second field of view at least partially overlap.

5. The system as claimed in any preceding claim, wherein the speed detection apparatus comprises an infra-red speed detector.

6. The system as claimed in any preceding claim, further comprising a processor configured to determine a density of objects moving within the first field of view using the image data.

7. The system as claimed in any preceding claim, wherein the speed detection apparatus is geographically separated from the image capture device.

8. The system as claimed in any of claims 1 to 6, wherein the speed detection apparatus is collocated with the image capture device.

9. A vehicular platform comprising a system as claimed in any preceding claim.

10. A non-transitory machine-readable storage medium encoded with instructions for regulating a frame processing rate in a vehicular traffic monitoring apparatus, the instructions executable by a processor of a machine whereby to cause the machine to:
generate image data using an image capture device comprising a first field of view, the image data comprising a set of image frames;
generate, using a speed detection apparatus comprising a second field of view, speed data representing a speed of an object moving within the second field of view; and
select a frame processing rate representing a number of image frames from the set of image frames to be processed per time unit on the basis of the speed data.

11. The non-transitory machine-readable storage medium as claimed in claim 10, further comprising instructions to:
select the frame processing rate on the basis of a density of objects moving within the first field of view.

12. The non-transitory machine-readable storage medium as claimed in claim 10 or 11, further comprising instructions to:
increase the frame processing rate on the basis of the speed of the object exceeding the predetermined threshold value.

13. The non-transitory machine-readable storage medium as claimed in any of claims 10 to 12, further comprising instructions to:
determine a density of objects moving within the first field of view using the image data.

14. A method for regulating a frame processing rate in a vehicular traffic monitoring apparatus, the method comprising:
generating image data using an image capture device comprising a first field of view, the image data comprising a set of image frames;
generating, using a speed detection apparatus comprising a second field of view, speed data representing a speed of an object moving within the second field of view; and
selecting the frame processing rate representing a number of image frames from the set of image frames to be processed per time unit on the basis of the speed data.

15. The method as claimed in claim 14, further comprising:
selecting the frame processing rate on the basis of a density of objects moving within the first field of view.
